# EUROPÄISCHE PATENTANMELDUNG

(11) **EP 2 163 788 A2**
(43) Veröffentlichungstag der Anmeldung: **17.03.2010**
(21) Anmeldenummer: 09167058.8
(22) Anmeldetag: 03.08.2009
(51) Int. Cl.: F16H 45/02

(54) **Hydrodynamischer Drehmomentwandler**

(30) Priorität: 15.09.2008 DE 102008042082
(71) Anmelder: ZF Friedrichshafen AG, 88038 Friedrichshafen (DE)
(72) Erfinder: Brehmer, Udo, 78464 Konstanz (DE)

(57) **Zusammenfassung**

Ein hydrodynamischer Drehmomentwandler mit einer Wandlerüberbrükkungskupplung (5) ist über ein Ventil (6) ansteuerbar, welches eine Schaltstellung aufweist, in welcher der hydrodynamische Drehmomentwandler vollständig mit dem Druckmittelreservoir (11) verbunden ist, um Schleppverluste zu verringern.

## Beschreibung

Die Erfindung bezieht sich auf einen hydrodynamischen Drehmomentwandler nach der im Oberbegriff von Anspruch 1 näher definierten Art.

Gattungsgemäße hydrodynamische Drehmomentwandler weisen ein Pumpenrad und ein Turbinenrad auf, wobei das Pumpenrad mit einem Antrieb und das Turbinenrad mit einem Abtrieb verbunden sind. Eine Kupplung ist so angeordnet, dass sie beim Betätigen im Schließsinne den Abtrieb mit dem Antrieb verbindet. Diese Kupplungen werden als Wandlerüberbrückungskupplungen bezeichnet.

Bei Verwendung eines Drehmomentwandlers mit einer Wandlerüberbrückungskupplung in einer Arbeitsmaschine, beispielsweise einem Baggerlader, ist der Antrieb zusätzlich mit einem Verbraucher verbunden, um diesen anzutreiben. Der Verbraucher, beispielsweise eine hydraulische Pumpe, liefert Druckmittel, um beispielsweise den Löffel des Baggers zu bewegen. Da das Fahrzeug beim Baggern so aufgebockt ist, dass die Fahrzeugräder vom Untergrund beabstandet sind, ist feststellbar, dass sich die Fahrzeugräder mit drehen.

Die DE 10 2005 016 495 A1 offenbart eine hydraulische Steuerung für einen hydrodynamischen Drehmomentwandler mit einer geregelten Wandler-überbrückungskupplung nach dem Oberbegriff von Anspruch 1.

Der vorliegenden Erfindung liegt die Aufgabe zugrunde, einen hydrodynamischen Drehmomentwandler mit einer Kupplung zu schaffen, welcher so abschaltbar ist, dass bei drehendem Antrieb der Abtrieb steht.

Die Aufgabe wird mit einem, auch die kennzeichnenden Merkmale des Hauptanspruchs aufweisenden, gattungsgemäßen hydrodynamischen Drehmomentwandler gelöst.

Erfindungsgemäß weist der hydrodynamische Drehmomentwandler ein Pumpenrad, ein Turbinenrad und eine Kupplung auf, wobei die Kupplung im Schließsinne betätigt den Antrieb mit dem Abtrieb verbindet, und im Öffnungssinne betätigt den Antrieb vom Abtrieb trennt. Das Pumpenrad ist mit dem Antrieb verbunden und das Turbinenrad mit dem Abtrieb. Wird der hydrodynamische Drehmomentwandler von einer Druckmittelquelle mit Druckmittel befüllt und der Antrieb angetrieben, so kann ein Drehmoment am Turbinenrad abgenommen werden. Die Kupplung weist eine dem Turbinenrad zugewandte Fläche und eine dem Turbinenrad abgewandte Fläche auf und wird, je nachdem, welcher Druck auf die jeweilige Fläche der Kupplung wirkt, im Schließsinne oder im Öffnungssinne betätigt. Soll die Kupplung im Öffnungssinne betätigt werden, so wird Druckmittel so zugeführt, dass auf der dem Turbinenrad abgewandten Fläche ein höherer Druck ansteht als auf der dem Turbinenrad zugewandten Fläche. Um zu erreichen, dass bei drehendem Antrieb der Abtrieb stillsteht, wird die Druckmittelquelle vom hydrodynamischen Drehmomentwandler vollständig abgetrennt und der hydrodynamische Drehmomentwandler mit einem Druckmittelreservoir verbunden, wodurch das Druckmittel aus dem hydrodynamischen Drehmomentwandler vollständig entweicht. Auch die Druckmittelzuführung zur Kupplung wird von der Druckmittelquelle getrennt. Durch das Entleeren des hydrodynamischen Drehmomentwandlers kann kein Drehmoment vom Pumpenrad zum Turbinenrad übertragen werden und die Kupplung erzeugt keinerlei Schleppverluste, welche durch das Vorhandensein von Druckmittel zwischen den Lamellen entstehen könnten.

Um zu verhindern, dass die Kupplung sich in diesem Zustand unkontrolliert schließt, wird die Kupplung, vorzugsweise mittels einer Feder, im Öffnungssinne gehalten.

Dadurch, dass der hydrodynamische Drehmomentwandler und die Kupplung frei von Druckmittel sind, wird erreicht, dass bei drehendem Antrieb und aufgebocktem Fahrzeug die Fahrzeugräder stillstehen.

Weitere Merkmale sind der Figuren-Beschreibung zu entnehmen.

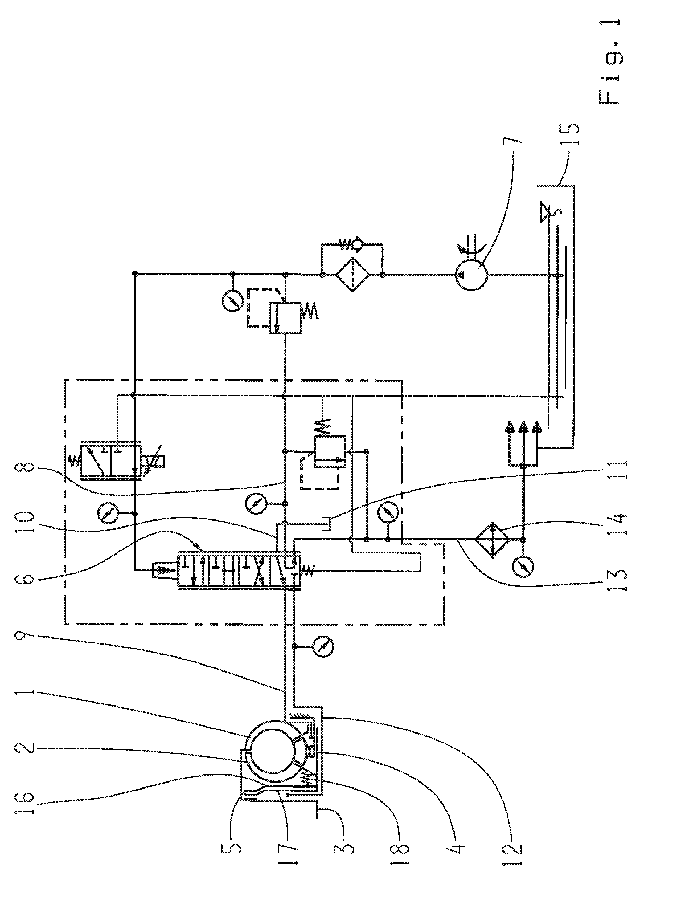

Die einzige Figur zeigt einen hydrodynamischen Drehmomentwandler mit einem Pumpenrad 1 und einem Turbinenrad 2, wobei das Pumpenrad 1 mit einem Antrieb 3 und das Turbinenrad 2 mit einem Abtrieb 4 verbunden ist. Im geschlossenen Zustand verbindet eine Kupplung 5 den Antrieb 3 mit dem Abtrieb 4. Ist der hydrodynamische Drehmomentwandler vollständig mit Druckmittel befüllt und der Antrieb 3 wird angetrieben und die Kupplung 5 ist im öffnungssinne betätigt, so erzeugt das Pumpenrad 1 in Verbindung mit dem Turbinenrad 2 ein Drehmoment am Abtrieb 4. Ein Ventil 6 hat vier Schaltstellungen, wobei in einer Schaltstellung Druckmittel, welches von einer Druckmittelquelle 7 gefördert wird, über die Leitung 8 in die Leitung 9 und von dort in den Drehmomentwandler gelangt. In dieser Schaltstellung ist die Leitung 10, welche zum Druckmittelreservoir 11 führt, verschlossen. Die Leitung 12 ist mit der Leitung 13 verbunden, welche über einen Wärmetauscher 14 in ein Druckmittelreservoir 15 mündet. In dieser Schaltstellung überwiegt der Druck auf der Fläche 16 gegenüber dem Druck auf der Fläche 17, wodurch die Kupplung 5 im Schließsinne betätigt wird.

In einer weiteren Schaltstellung des Ventils 6 ist die Leitung 10 verschlossen, die Leitung 8 und die Leitung 9 miteinander verbunden, die Leitung 13 und 12 und zusätzlich die Leitung 9 mit der Leitung 12 miteinander verbunden, wodurch sich eine Beruhigung des Druckmittels im hydrodynamischen Wandler einstellt.

In einer weiteren Schaltstellung des Ventils 6 ist die Leitung 10 verschlossen, die Leitung 8 mit der Leitung 12 und die Leitung 13 mit der Leitung 9 verbunden, wodurch der Druck auf der Fläche 17 höher ist als der Druck auf der Fläche 16, und dadurch die Kupplung 5 im Öffnungssinne betätigt wird.

In einer weiteren Schaltstellung des Ventils 6 ist die Leitung 9 mit der Leitung 10 und somit mit dem Druckmittelreservoir 11 verbunden, die Leitung 12 ist verschlossen und die Leitung 8 ist mit der Leitung 13 verbunden. In dieser Schaltstellung läuft das Druckmittel aus dem hydrodynamischen Drehmomentwandler in das Druckmittelreservoir 11 ab, wodurch das Pumpenrad 1 kein Drehmoment mehr zum Turbinenrad 2 übertragen kann. Auch das Druckmitel an den Flächen 16 und 17, und somit der Kupplung 5, läuft ab, wodurch sich die Schleppverluste auch bei geöffneter Kupplung 5 minimieren. Damit die Kupplung 5 nicht unkontrolliert schließt, wird diese mit der Feder 18 im Öffnungssinne gehalten. Dadurch besteht die Möglichkeit, bei stehendem Fahrzeug den Antrieb 3 um einen mit diesem in Wirkverbindung stehenden Verbraucher anzutreiben, ohne dass am Abtrieb 4 ein größeres Drehmoment ansteht, wodurch der Wirkungsgrad verbesser wird.

### Bezugszeichen

- 1: Pumpenrad
- 2: Turbinenrad
- 3: Antrieb
- 4: Abtrieb
- 5: Kupplung
- 6: Ventil
- 7: Druckmittelquelle
- 8: Leitung
- 9: Leitung
- 10: Leitung
- 11: Druckmittelreservoir
- 12: Leitung
- 13: Leitung
- 14: Wärmetauscher
- 15: Druckmittelreservoir
- 16: Fläche
- 17: Fläche
- 18: Feder

## Patentansprüche

1. Hydrodynamischer Drehmomentwandler mit einem Pumpenrad (1) und einem Turbinenrad (2), wobei ein Antrieb (3) mit dem Pumpenrad (1) und ein Abtrieb (4) mit dem Turbinenrad (2) in Verbindung steht, und mit einer Kupplung (5), mittels welcher das Turbinenrad (2) oder der Abtrieb (4) mit dem Pumpenrad (1) oder dem Antrieb (3) verbindbar ist, mit Mittel zum Betätigen der Kupplung (5) und Mittel zum Befüllen und Entleeren des Drehmomentwandlers, **dadurch gekennzeichnet, dass** die Mitel zum Befüllen und Entleeren und die Mittel zum Betätigen der Kupplung eine Schaltstellung aufweisen, in welcher der Drehmomentwandler und die Kupplung (5) von einer Druckmittelquelle (7) getrennt und ausschließlich mit einem Druckmittelreservoir (11) verbunden ist.

2. Hydrodynamischer Drehmomentwandler nach Anspruch 1, **dadurch gekennzeichnet, dass** die Kupplung (5) in dieser Schaltstelllung über eine Feder (18) im Öffnungssinne gehalten ist.

3. Hydrodynamischer Drehmomentwandler nach Anspruch 1, **dadurch gekennzeichnet, dass** ein Ventil (6) in einer ersten Schaltstellung den Drehmomentwandler und die Kupplung (5) von der Druckmittelquelle (7) trennt und den Drehmomentwandler mit einem Druckmittelreservoir (15) verbindet, und in einer zweiten Schaltstellung den Drehmomentwandler mit der Druckmittelquelle (7) verbindet, und die Kupplung (5) durch Ansteuern mit Druckmittel im Öffnungssinne betätigt, und in einer dritten Schaltstellung den Drehmomentwandler mit der Druckmittelquelle (7) verbindet und die Kupplung (5) durch Ansteuern mit Druckmittel im Schließsinne betätigt.

4. Hydrodynamischer Drehmomentwandler nach Anspruch 3, **dadurch gekennzeichnet, dass** das Ventil (6) eine vierte Schaltstellung aufweist, welche zwischen der zweiten und der dritten Schaltstellung angeordnet ist, und die Druckmittelzuführung (8) und die Druckmittelrückführung (13) des Drehmomentwandlers miteinander verbindet, wodurch sich das Druckmittel im Drehmomentwandler beruhigt.

5. Hydrodynamischer Drehmomentwandler nach Anspruch 1, **dadurch gekennzeichnet, dass** ein Verbraucher mit dem Antrieb (3) verbunden ist.

6. Hydrodynamischer Drehmomentwandler nach Anspruch 4, **dadurch gekennzeichnet, dass** das Ventil (6) als eigenständige Baueinheit an ein den Drehmomentwandler aufnehmendes Gehäuse anbaubar ist.
